# EUROPEAN PATENT SPECIFICATION

(11) **EP 1 697 017 B1**
(45) Date of publication and mention of the grant of the patent: **26.05.2010**
(21) Application number: 04808769.6
(22) Date of filing: 08.12.2004
(51) Int. Cl.: B01D 29/23

(54) **FILTER ELEMENT**
FILTERELEMENT
ELEMENT FILTRANT

(30) Priority: 24.12.2003 NL 1025126
(43) Date of publication of application: 06.09.2006
(73) Proprietor: R. J. Meijer Holding B.V., 7231 AD Warnsveld (NL)
(72) Inventor: MEIJER, Robert, Jan, NL-7203 BL Zutphen (NL)
(74) Representative: Dokter, Hendrik Daniel
(86) International application number: PCT/NL2004/000853
(87) International publication number: WO 2005/061074

(56) References cited:
- NL-C- 1 001 941

## Description

The invention relates to a filter element for a liquid or gas filter, comprising a cylindrical filter body assembled from disc-shaped parts and enclosed by a bag of a liquid-permeable material, which parts are formed in each case by discs of filter material provided with a central opening and mutually coupled along this opening, which parts are mutually coupled in each case along their outer periphery, wherein a first disc-shaped part and the bag are coupled to a peripheral ring, wherein a spacer is provided between successive discs and wherein a final disc-shaped part is coupled along its outer periphery to a disc of filter material not provided with a central opening, and is separated therefrom by a spacer.

Such a filter element is known from Netherlands patent no. 1001941C. In order to filter a medium (gas or liquid), this filter element is placed in a filter housing which is provided with an inlet and an outlet compartment, which are separated from each other by a flange extending from the wall of the filter housing and connecting to the peripheral ring of the filter element. The medium for filtering is admitted under pressure on the inlet side into the filter above the first disc-shaped part and is guided through the disc-shaped parts and the bag of liquid-permeable material via the central openings in the disc-shaped parts and the spacers, wherein solid particles remain behind on these disc-shaped parts. With the known filter element a considerable increase in the filtering surface area is achieved relative to filter elements not assembled from disc-shaped parts.

It is perceived as a drawback of the known filter element that it is less suitable for application in installations in which high pressures occur, or in which large fluctuations in pressure occur. Fluctuations in pressure occur particularly during starting or stopping admitting medium for filtering and cause rapid wear of the filter element, in particular of the first disc-shaped part coupled to the peripheral ring.

It is an object of the invention to provide a filter element which is durable and which can withstand high pressures and large fluctuations in pressure.

This object is achieved, and other advantages gained, with a filter element wherein according to the invention the first disc-shaped part is coupled to the peripheral ring by means of a fold of a flexible material extending between the cylindrical filter body and the bag.

It has been found that in such a filter element the filter body can be highly compressed under the influence of pressure fluctuations, wherein the coupling of the filter body and the peripheral ring is not mechanically loaded, or hardly so, since the fold of the flexible material acts as a bellows.

In a practical advantageous embodiment, the fold is manufactured from a filter material.

In order to increase even further the filtering surface area in a filter element according to the invention, in one embodiment successive disc-shaped parts are coupled in each case on their outer periphery by at least two bands. This provides the advantage that the successive disc-shaped parts are pressed against the intermediate spacers, and the distance between these parts is no greater than a minimum distance required for a good passage of the medium for filtering.

In an alternative embodiment, a filter element according to the invention is provided with at least one band extending from the peripheral edge of the first disc-shaped part and round the filter body, and bounding this filter body.

Such a band can be arranged in simple and inexpensive manner, and after arrangement provides the advantage that fastening of the bag of a liquid-permeable material to the peripheral ring can likewise take place in simple and inexpensive manner.

The filter material in a filter element according to the invention is for instance a plastic material, a metal or a natural material.

The spacers in a filter element according to the invention are for instance manufactured from a plastic material, a metal or from glass fibre.

The plastic material is for instance polyacrylonitrile, polyamide, polyester, polypropylene, polytetrafluoroethylene, aramid, polyvinylidene chloride or polyphenylene sulfide.

The metal is for instance stainless steel.

The natural material is for instance cotton, wool or glass.

The invention will be elucidated hereinbelow on the basis of an exemplary embodiment, with reference to the drawings.

In the drawings:
Fig. 1 shows a perspective view of an embodiment of a filter element according to the invention, and
Fig. 2 shows an axial cross-section through the filter element shown in fig. 1 along the line II-II.

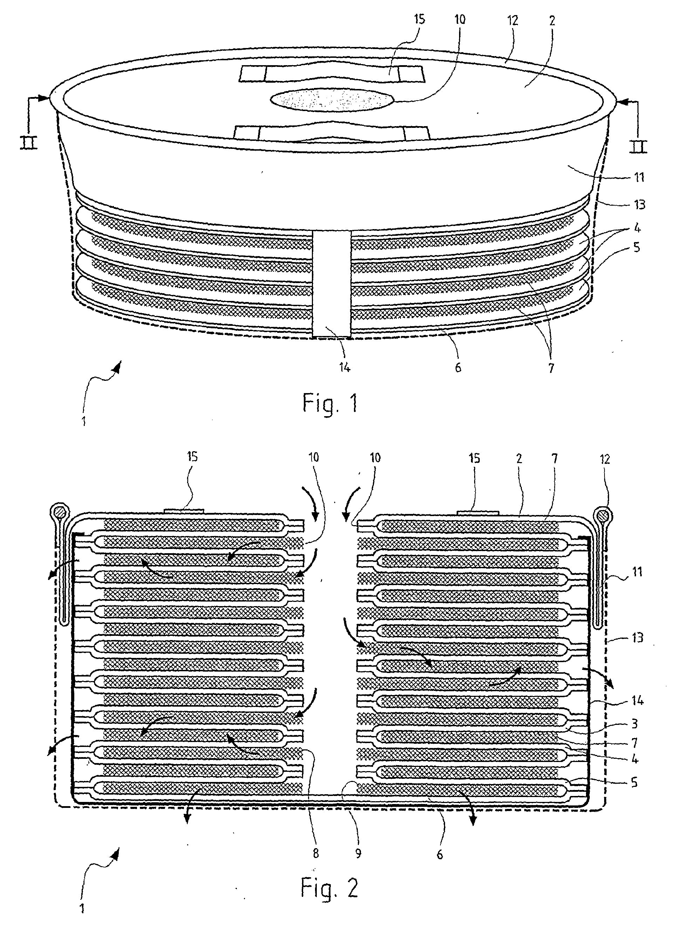

Fig. 1 and 2 show a filter element 1 with a cylindrical filter body, which is assembled from disc-shaped parts which are each formed by two discs 2, 3, 4, 5 of filter material, for instance needlefelt, separated by a disc of mesh 7 which functions as spacer and drainage medium and which is provided with a central opening 10. Discs 2, 3, 4, 5 of filter material are likewise provided with a central opening 10 and are attached to each other in pairs along this opening, for instance by stitching. The successive parts, each consisting of filter material 3, mesh 7, filter material 4, are also separated from each other by a mesh 8 and attached to each other along their outer periphery, for instance by stitching. The final disc of filter material 5 (the bottom disc in the figure) is attached along its outer periphery to a base 6 of filter material not provided with a central opening, and is separated therefrom by a mesh 9. The first disc 2 (the top disc in the figure) is attached via a fold 11 to a peripheral ring 12, to which is also fastened a bag 13 of a screen mesh material. The length of the cylindrical filter body is defined by a band 14 which is tightened from a first point on the peripheral edge of the first disc-shaped part, in axial direction along the cylindrical outer periphery, under base 6 and again along the cylindrical outer periphery to a second point diametrically opposite the first point on the peripheral edge. Although one band 14 will suffice, it is recommended to enclose the cylindrical body with two bands which cross each other under the base 6. The arrows in the figure represent the direction of flow of the medium for filtering, which is admitted into the filter element via upper opening 10 and which flows as filtrate into the outlet compartment of a filter housing via mesh bag 13. The figures further show two handgrips 15 which enable quick and easy placing of the filter element in a filter housing or removal therefrom.

## Claims

1. Filter element (1) for a liquid or gas filter, comprising a cylindrical filter body assembled from disc-shaped parts and enclosed by a bag (13) of a liquid-permeable material, which parts are formed in each case by discs (2, 3, 4, 5) of filter material provided with a central opening (10) and mutually coupled along this opening (10), which parts are mutually coupled in each case along their outer periphery, wherein a first disc-shaped part and the bag (13) are coupled to a peripheral ring (12), wherein a spacer (7, 8) is provided between successive discs (2, 3, 4, 5) and wherein a final disc-shaped part is coupled along its outer periphery to a disc (6) of filter material not provided with a central opening, and is separated therefrom by a spacer (9), **characterized in that** the first disc-shaped part is coupled to the peripheral ring (12) by means of a fold (11) of a flexible material extending between the cylindrical filter body and the bag (13).

2. Filter element (1) as claimed in claim 1, **characterized in that** the fold (11) is manufactured from a filter material.

3. Filter element (1) as claimed in either of the claims 1-2, **characterized in that** successive disc-shaped parts are coupled in each case on their outer periphery by at least two bands.

4. Filter element (1) as claimed in either of the claims 1-2, **characterized in that** it is provided with at least one band (14) extending from the peripheral edge of the first disc-shaped part and round the filter body, and bounding this filter body.

5. Filter element (1) as claimed in any of the claims 1-4, **characterized in that** the filter material is a plastic material.

6. Filter element (1) as claimed in any of the claims 1-4, **characterized in that** the filter material is a metal.

7. Filter element (1) as claimed in any of the claims 1-4, **characterized in that** the filter material is a natural material.

8. Filter element (1) as claimed in any of the claims 1-6, **characterized in that** the spacers (6, 7, 8, 9) are manufactured from a plastic material.

9. Filter element (1) as claimed in any of the claims 1-6, **characterized in that** the spacers (6, 7, 8, 9) are manufactured from a metal.

10. Filter element (1) as claimed in any of the clams 1-6, **characterized in that** the spacers (6, 7, 8, 9) are manufactured from glass fibre.

11. Filter element (1) as claimed in either of the claims 5 or 8, **characterized in that** the plastic material is selected from the group comprising polyacrylonitrile, polyamide, polyester, polypropylene, polytetrafluoroethylene, aramid, polyvinylidene chloride and polyphenylene sulfide.

12. Filter element (1) as claimed in either of the claims 6 or 9, **characterized in that** the metal is stainless steel.

13. Filter element (1) as claimed in claim 7, **characterized in that** the natural material is selected from the group comprising cotton, wool and glass.

## Patentansprüche

1. Filterelement (1) für einen Flüssigkeits- oder Gasfilter, umfassend einen aus scheibenförmigen Teilen zusammengesetzten zylindrischen Filterkörper, von einem Sack (13) aus einem flüssigkeitsdurchlässigen Material umgeben, welche Teile jeweils gebildet werden von mit einer zentralen Öffnung (10) ausgestatteten, entlang dieser Öffnung (10) miteinander verbundenen Scheiben (2, 3, 4, 5) Filtermaterial, welche Teile jeweils entlang ihres Außenumfangs miteinander verbunden sind, wobei ein erster scheibenförmiger Teil und der Sack (13) mit einem Umfangsring (12) verbunden sind, wobei zwischen aufeinander folgenden Scheiben (2, 3, 4, 5) ein Abstandhalter (7, 8) bereitgestellt ist und wobei ein letzter scheibenförmiger Teil entlang seines Außenumfangs mit einer nicht mit einer zentralen Öffnung ausgestatteten Scheibe (6) Filtermaterial verbunden ist, davon durch einen Abstandhalter (9) getrennt, **dadurch gekennzeichnet, dass** der erste scheibenförmige Teil mit dem Umfangsring (12) mittels einer sich zwischen dem zylindrischen Filterkörper und dem Sack (13) erstreckenden Falte (11) aus einem flexiblen Material verbunden ist.

2. Filterelement (1) nach Anspruch 1, **dadurch gekennzeichnet, dass** die Falte (11) aus einem Filtermaterial hergestellt ist.

3. Filterelement nach einem der Ansprüche 1-2, **dadurch gekennzeichnet, dass** aufeinander folgende scheibenförmige Teile jeweils durch wenigstens zwei Bänder an ihrem Außenumfang verbunden sind.

4. Filterelement (1) nach einem der Ansprüche 1-2, **dadurch gekennzeichnet, dass** dieses mit wenigstens einem sich von dem Umfangsrand des ersten scheibenförmigen Teils um den Filterkörper erstreckenden und diesen Filterkörper begrenzenden Band (14) ausgestattet ist.

5. Filterelement (1) nach einem der Ansprüche 1-4, **dadurch gekennzeichnet, dass** das Filtermaterial ein Kunststoffmaterial ist.

6. Filterelement (1) nach einem der Ansprüche 1-4, **dadurch gekennzeichnet, dass** das Filtermaterial ein Metall ist.

7. Filterelement (1) nach einem der Ansprüche 1-4, **dadurch gekennzeichnet, dass** das Filtermaterial ein natürliches Material ist.

8. Filterelement (1) nach einem der Ansprüche 1-6, **dadurch gekennzeichnet, dass** die Abstandhalter (6, 7, 8, 9) aus einem Kunststoffmaterial hergestellt sind.

9. Filterelement (1) nach einem der Ansprüche 1-6, **dadurch gekennzeichnet, dass** die Abstandhalter (6, 7, 8, 9) aus einem Metall hergestellt sind.

10. Filterelement (1) nach einem der Ansprüche 1-6, **dadurch gekennzeichnet, dass** die Abstandhalter (6, 7, 8, 9) aus Glasfasern hergestellt sind.

11. Filterelement (1) nach einem der Ansprüche 5 oder 8, **dadurch gekennzeichnet, dass** das Kunststoffmaterial ausgewählt wurde aus der Gruppe, die Polyacrylnitril, Polyamid, Polyester, Polypropylen, Polytetrafluorethylen, Aramid, Polyvinylidenchlorid und Polyphenylensulfid umfasst.

12. Filterelement (1) nach einem der Ansprüche 6 oder 9, **dadurch gekennzeichnet, dass** das Metall rostbeständiger Stahl ist.

13. Filterelement (1) nach Anspruch 7, **dadurch gekennzeichnet, dass** das natürliche Material ausgewählt wurde aus der Gruppe, die Baumwolle, Wolle und Glas umfasst.

## Revendications

1. Elément filtrant (1) pour un filtre de liquide ou de gaz, comprenant un corps de filtre cylindrique assemblé à partir de parties en forme de disque et entourées par un sac (13) constitué d'une matière perméable au liquide, lesdites parties sont formées dans chaque cas par des disques (2, 3, 4, 5) d'une matière filtrante comportant une ouverture centrale (10) et couplés les uns aux autres le long de cette ouverture (10), lesdites parties sont mutuellement couplées dans chaque cas le long de leur périphérie extérieure, dans lequel une première partie en forme de disque et le sac (13) sont couplés à un anneau périphérique (12), dans lequel un écarteur (7, 8) est prévu entre des disques successifs (2, 3, 4, 5), et dans lequel une partie finale en forme de disque est couplée le long de sa périphérie extérieure à un disque (6) d'une matière filtrante qui ne comporte pas d'ouverture centrale, et est séparée de celui-ci par un écarteur (9), **caractérisé en ce que** la première partie en forme de disque est couplée à l'anneau périphérique (12) au moyen d'un pli (11) d'une matière flexible qui s'étend entre le corps de filtre cylindrique et le sac (13).

2. Elément filtrant (1) selon la revendication 1, **caractérisé en ce que** le pli (11) est fabriqué à partir d'une matière filtrante.

3. Elément filtrant (1) selon l'une quelconque des revendications 1 à 2, **caractérisé en ce que** les parties successives en forme de disque sont couplées dans chaque cas sur leur périphérie extérieure par au moins deux bandes.

4. Elément filtrant (1) selon l'une quelconque des revendications 1 à 2, **caractérisé en ce qu'**il comporte au moins une bande (14) qui s'étend à partir du bord périphérique de la première partie en forme de disque et autour du corps de filtre, délimitant ce corps de filtre.

5. Elément filtrant (1) selon l'une quelconque des revendications 1 à 4, **caractérisé en ce que** la matière filtrante est une matière plastique.

6. Elément filtrant (1) selon l'une quelconque des revendications 1 à 4, **caractérisé en ce que** la matière filtrante est un métal.

7. Elément filtrant (1) selon l'une quelconque des revendications 1 à 4, **caractérisé en ce que** la matière filtrante est une matière naturelle.

8. Elément filtrant (1) selon l'une quelconque des revendications 1 à 6, **caractérisé en ce que** les écarteurs (6, 7, 8, 9) sont fabriqués à partir d'une matière plastique.

9. Elément filtrant (1) selon l'une quelconque des revendications 1 à 6, **caractérisé en ce que** les écarteurs (6, 7, 8, 9) sont fabriqués à partir d'un métal.

10. Elément filtrant (1) selon l'une quelconque des revendications 1 à 6, **caractérisé en ce que** les écarteurs (6, 7, 8, 9) sont fabriqués à partir de fibre de verre.

11. Elément filtrant (1) selon l'une quelconque des revendications 5 à 8, **caractérisé en ce que** la matière plastique est sélectionnée dans le groupe comprenant le polyacrylonitrile, le polyamide, le polyester, le polypropylène, le polytétrafluoroéthylène, l'aramide, le chlorure de polyvinylidène et le sulfure de polyphénylène.

12. Elément filtrant (1) selon l'une quelconque des revendications 6 ou 9, **caractérisé en ce que** le métal est l'acier inoxydable.

13. Elément filtrant (1) selon la revendication 7, **caractérisé en ce que** la matière naturelle est sélectionnée dans le groupe comprenant le coton, la laine et le verre.
